(19) Europäisches Patentamt

European Patent Office

Office européen des brevets

(11) Veröffentlichungsnummer: **0 271 820 B1**

# (12) EUROPÄISCHE PATENTSCHRIFT

(45) Veröffentlichungstag der Patentschrift: **10.06.92**

(21) Anmeldenummer: **87118211.9**

(22) Anmeldetag: **09.12.87**

(51) Int. Cl.⁵: **G11B 15/44**

(54) **Wickel- und Bandantrieb.**

(30) Priorität: **18.12.86 DE 3643210**

(43) Veröffentlichungstag der Anmeldung:
**22.06.88 Patentblatt 88/25**

(45) Bekanntmachung des Hinweises auf die
Patenterteilung:
**10.06.92 Patentblatt 92/24**

(84) Benannte Vertragsstaaten:
**AT BE CH DE ES FR GB GR IT LI LU NL SE**

(56) Entgegenhaltungen:
**EP-A- 0 079 053**
**GB-A- 2 094 542**

**PATENT ABSTRACTS OF JAPAN vol. 8, no.
183 (P-296)(1620) 23 August 1984, & JP-A-59
75456**

**PATENT ABSTRACTS OF JAPAN vol. 8, no.
133 (P-281)(1570) 20 Juni 1984, & JP-A-59
36356**

**PATENT ABSTRACTS OF JAPAN vol. 6, no.
79 (P-115)(957) 18 Mai 1982, & JP-A-57 15249**

**PATENT ABSTRACTS OF JAPAN vol. 3, no.
67 (E-116)(116) 09 Juni 1979, & JP-A-54 46522**

**PATENT ABSTRACTS OF JAPAN vol. 8, no.
42 (P-256)(1479) 23 Februar 1984, & JP-A-58
194159**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Schandl, Hartmut, Dipl.-Ing.
Egerstrasse 2
W-7730 Villingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In bekannten Schwenkradantrieben wird das auf einem Schwenkhebel angeordnete Schwenkrad über ein Ritzel angetrieben. Dabei bildet die Ritzelwelle den Drehpunkt für den Schwenkhebel. Die Schwenkbewegung wird aus der Drehrichtung des Ritzels abgeleitet. Um sicherzustellen, daß bei Drehrichtungsänderung eine Schwenkbewegung durchgeführt wird, und auch um eine stabile Lage des Schwenkhebels in seiner Endposition sicherzustellen, werden Mittel eingesetzt, die auf das Schwenkrad einwirken und ein erhöhtes Drehmoment zwischen Schwenkrad und Schwenkhebel erzeugen. Üblicherweise werden hierfür Filz- oder Hysteresekupplungen verwendet. Diese haben den Nachteil, daß sie stets mit dem eingestellten Moment bremsen und dadurch den Antriebsmotor dauernd belasten.

Zum Beispiel offenbart GB-A-2 094 052 einen Wickel- und Bandantrieb, der alle im Oberbegriff des Anspruchs 1 enthaltenen Merkmale aufweist, und in dem die Schwenkbewegung des Schwenkhebels durch eine Filzscheibe übertragen wird, wobei die Filzscheibe durch eine Feder zwischen den Schwenkhebel und das Schwenkrad gepreßt wird, um die Drehung des Schwenkrades zu bremsen.

Es ist Aufgabe der Erfindung, eine sichere Mitnahme des Schwenkhebels bei Drehrichtungsänderung zu gewährleisten, ohne daß der Antriebsmotor nach Beendigung der Schwenkbewegung zusätzlich belastet ist. Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip wird die Schwenkbewegung des Schwenkhebels von der antreibenden Ritzelwelle durch eine Kugel übertragen, die einerseits an der Welle des treibenden Ritzels anliegt, im Schwenkhebel in einer Nut gelagert ist, und andererseits durch elastische Mittel innerhalb der Nut gegen die Ritzelwelle gedrückt wird. Dabei ist die Nut etwa halbkreisförmig ausgebildet. Die Nut ist so gestaltet, daß in einem mittleren Teil die Kugel durch federnde Elemente geklemmt ist und in den beiden äußeren Teilen frei beweglich ist.

In der erfindungsgemäßen Ausbildung wälzt sich die Kugel bei einer Drehrichtungsänderung zwischen Welle und Schwenkarm ab, und rollt in den eingeengten Mittelteil der Bahn. Dadurch verspannt die Kugel das Lager und die Reibung erhöht sich so stark, daß der Schwenkarm von der Welle mitgenommen wird und auf die andere Seite schwenkt. In dieser Position wird er durch den Permanentmagneten gehalten, während die Kugel durch die Reibung aus ihrer Klemmposition gelöst wird, bis ans Ende der Nut weiter transportiert wird, und wieder frei beweglich ist, und somit kein zusätzliches Bremsmoment während des weiteren Betriebes verursacht. Die Lauffläche der Kugel innerhalb der Nut hat zu den beiden Seiten hin eine ansteigende Form und ist mit einer zur Ritzelwelle hin abgeschrägten Grundfläche ausgestattet. Dadurch wird erreicht, daß die Kugel stets in Kontakt mit der Ritzelwelle bleibt, wodurch die Funktion sichergestellt ist.

Anhand der Figur soll die Erfindung beispielhaft näher erläutert werden.

Fig. 1    zeigt in einer Skizze einen Schwenkradantrieb,

Fig. 2    zeigt in einer Schnittdarstellung einen Schwenkradantrieb mit Übertragung der Schwenkbewegung durch eine Kugel,

Fig. 3    zeigt den Aufbau eines Schwenkhebels.

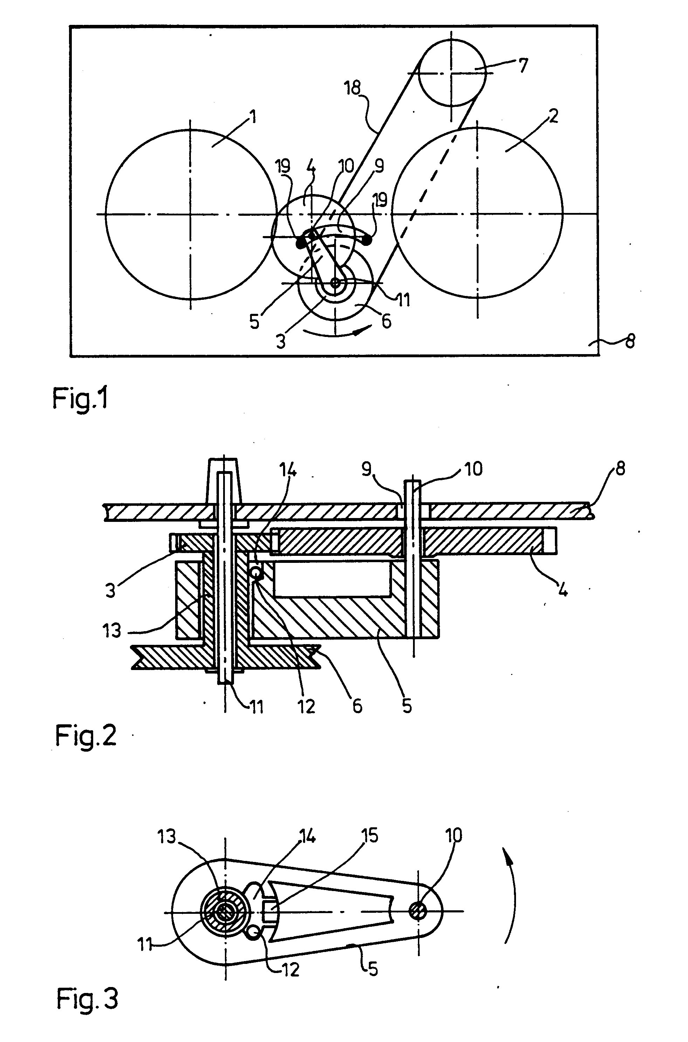

Fig. 1 zeigt in einer Skizze einen Schwenkradantrieb. Von einem Motor 7 wird über einen Riemen 18 eine Riemenscheibe 6 angetrieben, die mit dem Ritzel 3 über eine Welle 13 verbunden ist. Den Drehpunkt für den Schwenkhebel 5 bildet Welle 13, die auf einer Achse 11 drehbar gelagert ist. Von Ritzel 3 wird das Schwenkrad 4, es ist mit seiner Achse 10 drehbar auf dem Schwenkhebel 5 befestigt, angetrieben. Durch die Drehrichtung von Ritzel 3 wird vorgegeben, welcher Wickelteller 1,2 durch das Schwenkrad 4 angetrieben wird.

In der Skizze ist die Drehrichtung für das Ritzel 3 durch den Pfeil vorgegeben. Bei dieser Drehrichtung wird das Schwenkrad 4 an Wickelteller 1 angelegt, wobei der Schwenkweg durch einen Ausschnitt 9 im Chassis 8 begrenzt ist, an dessen Endpunkten Dauermagnete 19 befestigt sind, die als Anschlag für die aus einem weichmagnetischen Werkstoff bestehenden Achse 10 von Schwenkrad 4 dienen. Durch den Ausschnitt 9 ragt die Schwenkradachse 10, die in ihrer Endstellung durch die Magnete 19 in dieser Stellung festgehalten wird. Der Dauermagnet kann auch in oder an der Achse 10 angebracht sein, so daß die magnetische Achse am Anschlag im weichmagnetischen Chassisblech haftet. Erst bei Drehrichtungswechsel wird die magnetische Haftung durch das zwischen Schwenkhebel 5 und Schwenkrad 4 bestehende Reibmoment überwunden. Dieses Reibmoment wird durch die Kugel 12 gebildet, die, wie in Fig. 2 und 3 dargestellt, zwischen Ritzelwelle 3 und Schwenkarm 5 während der Schwenkbewegung eingeklemmt ist.

Fig. 2 zeigt in einer Schnittdarstellung einen Schwenkradantrieb mit Übertragung der Schwenkbewegung durch eine Kugel 12. Kugel 12 ist zwischen der Ritzelwelle 13 und dem Schwenkhebel 5 in einer Nut 14 von Schwenkhebel 5 angeordnet. Den Aufbau von Schwenkhebel 5 zeigt Fig. 3. Die Kugel ist frei beweglich im unteren Teil von Nut 14 dargestellt. Im mittleren Teil von Nut 14 verengt sich diese durch eine elastische Zunge 15.

Bewegt sich die Ritzelwelle 13 in Pfeilrichtung, wird Kugel 12, die durch die zur Ritzelwelle 13 geneigte Nut 14 an der Ritzelwelle 13 anliegt, durch Reibung in den mittleren Teil von Nut 14 geführt, in dem die Kugel 12 durch die elastische Zunge 15 eingeklemmt wird. Durch diese Klemmung wird die Drehbewegung von Ritzelwelle 13 auf den Schwenkhebel 5 übertragen. Nach Beendigung der Schwenkbewegung an Anschlag 19 wird die Kugel 12 durch Reibung an Welle 13 aus der Klemmung herausgeführt und in den oberen Teil der Nut, jetzt wiederum frei beweglich, gelagert.

**Patentansprüche**

1. Wickel- und Bandantrieb, insbesondere für eine Magnetbandkassette mit zwei nebeneinanderliegenden, das Magnetband führenden Wickelkörpern, mit jeweils einem, über ein Schwenkrad (4) angetriebenen Wickelteller (1,2), wobei das Schwenkrad (4) mit seiner Achse (10) auf einem Schwenkhebel (5) angeordnet ist, dessen Drehpunkt von einer welle (13) eines das Schwenkrad (4) antreibenden Ritzels (3) gebildet ist, und die Schwenkrichtung des Schwenkhebels (5) aus der Drehrichtung des Ritzels (3) abgeleitet ist, dadurch gekennzeichnet, daß die Schwenkbewegung durch eine Kugel (12) übertragen wird, die während des Schwenkvorganges zwischen Ritzelwelle (13) und Schwenkhebel (5) elastisch eingeklemmt ist.

2. Wickel- und Bandantrieb nach Anspruch 1, dadurch gekennzeichnet, daß die Kugel (12) während der Schwenkbewegung durch die Klemmung keine oder nur eine geringe Eigenrotation ausführen kann.

3. Wickel- und Bandantrieb nach einem der Ansprüche 1 oder 2, dadurch gekennzeichnet, daß die Kugel (12) nach Beendigung des Schwenkvorganges durch Reibung an der Ritzelwelle (13) aus der elastischen Klemmung gelöst wird.

4. Wickel- und Bandantrieb nach einem der Ansprüche 1 - 3, dadurch gekennzeichnet, daß die Schwenkbewegung durch einen Anschlag (19) zwischen Chassis (8) und Schwenkhebel (5) begrenzt ist.

5. Wickel- und Bandantrieb nach Anspruch 4, dadurch gekennzeichnet, daß am Anschlag (19) eine Haftung zwischen Chassis (8) und Schwenkhebel (5) erfolgt.

6. Wickel- und Bandantrieb nach Anspruch 5, dadurch gekennzeichnet, daß die Haftung durch eine Magnetwirkung erfolgt.

7. Wickel- und Bandantrieb nach der Ansprüche 4 - 6, dadurch gekennzeichnet, daß die Achse (10) des Schwenkrades (4) durch einen Ausschnitt (9) im Chassis (8) ragt und dieses an den Anschlägen (9) berührt, wobei die Achse (10) aus einem permanent magnetischen Werkstoff besteht, oder einen Permanentmagneten trägt.

**Claims**

1. A winding and tape drive, more particularly for a magnetic tape cassette having two adjoining coil forms guiding the magnetic tape, each having a winder plate (1,2) driven via a pivot wheel (4), in which the pivot wheel (4) is arranged with its axle (10) on a pivot lever (5) of which the is formed by a shaft (13) of a pinion (3) driving the pivot wheel (4), and the pivoting direction of the pivot lever (5) is derived from the direction of rotation of the pinion (3), **characterised in that** the pivoting movement is transmitted by a ball (12) which is resiliently clamped between the pinion shaft (13) and the pivot lever (5) during the pivoting process.

2. A winding and tape drive according to claim 1, **characterised in that** the ball (12) can not perform any, or only a slight, natural rotation during the pivoting movement due to clamping.

3. A winding and tape drive according to any one of claims 1 or 2, **characterised in that** the ball (12) is released from its resilient clamping once the pivoting process is over due to friction against the pinion shaft (13).

4. A winding and tape drive according to any one of claims 1 to 3, **characterised in that** the pivoting movement is limited by a stop (19) between the chassis (8) and the pivot lever (5).

5. A winding and tape drive according to claim 4, **characterised in that** there is bonding between the chassis (8) and the pivot lever (5) at the stop (19).

6. A winding and tape drive according to claim 5, **characterised in that** the bonding takes place by magnetic action.

7. A winding and tape drive according to claims 4 to 6, **characterised in that** the axle (10) of the pivot wheel (4) projects through a recess (9) in the chassis (8) and touches the latter at the stops (19), in which the axle (10) consists of a permanent magnetic material or supports a permanent magnet.

saillie par une découpure (9) dans le châssis (8) et que celui-ci touche aux butées (19), l'axe (10) étant constitué par une matière magnétique en permanence ou portant un aimant permanent.

## Revendications

1. Entraînement d'enroulement et de bande, en particulier pour une cassette de bande magnétique avec deux bobines situées l'une à côté de l'autre, qui guident la bande magnétique, avec un plateau d'enroulement (1, 2) entraîné respectivement par une roue pivotante (4), la roue pivotante (4) étant placée avec son axe (10) sur un levier pivotant (5) dont le pivot est formé par un arbre (13) d'un pignon (3) qui entraîne la roue pivotante (4), la sens de pivotement du lever pivotant (5) étant dérivé du sens de rotation du pignon (3), **caractérisé en ce** que le mouvement de pivotement est transmis par une bille (12) qui est coïncée de manière élastique pendant l'opération de pivotement entre l'arbre de pignon (13) et le levier pivotant (5).

2. Entraînement d'enroulement et de bande selon la revendication 1, **caractérisé en ce** que la bille (12) ne peut pas effectuer de rotation propre ou ne peut qu'effectuer une faible rotation propre pendant le mouvement de pivotement, ceci étant dû au coïncement.

3. Entraînement d'enroulement et de bande selon l'une des revendications 1 ou 2, **caractérisé en ce** que la bille (12) est relâchée du coïncement élastique, après achèvement de l'opération de pivotement, par friction sur l'arbre de pignon (13).

4. Entraînement d'enroulement et de bande selon l'une des revendications 1 à 3, **caractérisé en ce** que le mouvement de pivotement est limité par une butée (19) entre le châssis (8) et le lever pivotant (5).

5. Entraînement d'enroulement et de bande selon la revendication 4, **caractérisé en ce** qu'il y a adhérence entre le châssis (8) et le levier pivotant (5) sur la butée (19).

6. Entraînament d'enroulement et de bande salon la revendication 5, **caractérisé en ce** que l'adhérence est effectuée par un effet magnétique.

7. Entraînement d'enroulement et de bande selon les revendications 4 à 6, **caractérisé en ce** que l'axe (10) de la roue pivotante (4) fais

Fig.1

Fig.2

Fig.3